# EUROPEAN PATENT APPLICATION

(11) **EP 1 649 827 A1**
(43) Date of publication of application: **26.04.2006**
(21) Application number: 05256542.1
(22) Date of filing: 21.10.2005
(51) Int. Cl.: A61C 19/06

(54) **Tooth whitening apparatus and methods**

(30) Priority: 21.10.2004 GB 0423332
(71) Applicant: Dezac Limited, Cheltenham GL50 1JJ (GB)
(72) Inventor: Grant, Antony, Cheltenham Gloucestershire, GL50 1SS (GB); Brown, Stephen, Cheltenham Gloucestershire, GL50 1SS (GB); Bitter, Ahmed, Cheltenham Gloucestershire, GL50 1SS (GB)
(74) Representative: Newell, William Joseph

(57) **Abstract**

A tooth whitening apparatus comprises a tray for receiving in use an amount of a light-transmitting tooth whitening composition such that the tray may be positioned relative to a user's teeth such that at least a major portion of the exposed regions of the teeth may be immersed in use in said composition at one time. A light source is provided for introducing into the tooth whitening composition light to propagate around said tray and to be incident on the immersed surfaces of said tooth at least partially due to internal reflection at the interface of said tooth whitening composition with the internal tray surface.

## Description

This invention relates in general to a tooth whitening apparatus and a method of using same to whiten human teeth. In particular, the invention provides an improved method and apparatus of using established tooth whitening compositions that use light energy, to achieve a faster and improved level of tooth whitening.

### BACKGROUND

Within modern society it is considered cosmetically desirable for a person's teeth to appear bright or "white".

A tooth is comprised of an inner dentin layer and an outer hard enamel layer. The enamel layer of a tooth is naturally an opaque white or slightly off-white colour. Tooth enamel is predominantly formed from inorganic material, mostly in the form of hydroxyapatite crystals, and further contains approximately 5% organic material primarily in the form of collagen. In contrast, dentin is composed of about 20% protein including collagen, the balance consisting of inorganic material, predominantly hydroxyapatite crystals, similar to that found in enamel.

The presence of colour-causing (chromogenic) substances in e.g. tobacco, beverages, food and salivary fluid, in addition to blood, amalgam restoratives, and pharmaceuticals such as tetracycline, can "stain" or reduce the "whiteness" of one's teeth.

These products or substances tend to accumulate on the enamel layer of the tooth and form a proteinaceous layer known as a pellicle.

Generally, tooth stains may be either extrinsic or intrinsic, depending upon their location within the tooth surface.

Extrinsic staining can usually be removed by mechanical methods of tooth cleaning and arises as a result of compounds such as tannins and other polyphenolic compounds which become trapped in and tightly bound to the proteinaceous layer on the surface of the teeth.

Intrinsic staining occurs when chromogens or pre-chromogens penetrate the enamel and dentin and become tightly bound to the tooth structure. Intrinsic staining cannot be removed by mechanical methods and generally requires the use of chemicals, which penetrate into the tooth structure and change the light absorptivity of the chromogen. The chemicals used are often oxidizing compounds such as hydrogen peroxide, and prolonged contact gradually bleaches and whitens stained teeth for contact times of greater than about 60 minutes for a number of treatment sessions over a period ranging from about 2 weeks to about 6 months, depending upon the severity of tooth staining. The slow rate of bleaching is in large part the consequence of the formulations required to maintain stability of the oxidizing composition.

The most commonly used oxidative compositions contain the hydrogen peroxide precursor carbamide peroxide which is mixed with an anhydrous or low-water content, hygroscopic viscous carrier containing glycerin and/or propylene glycol and/or polyethylene glycol.

Many known peroxide compositions are liquid in nature and it is usual to provide a mouth guard moulded to the patient's dentition to hold the bleaching material in place and prevent the bleaching material either flowing away or being degraded and removed by saliva before sufficient time has passed to effect bleaching. U.S. Pat. No. Re. 34,196 describes a tooth whitening material employing one such mouth guard formed of a polymerizable composition that is shaped to conform to the gingival contours and subsequently cured by exposure to a high intensity light source. Once the soft tissue has been isolated and protected, an oxidizing compound is applied directly onto the stained tooth surfaces for a specified period of time or until a sufficient change in tooth colour has occurred.

However it has been noticed that the direct application of oxidising compounds, as practiced at present, over prolonged time periods has resulted in tooth sensitivity and harm to tooth enamel, dentin, or pulp.

Tooth sensitivity is believed to result from the movement of fluid through the dentinal tubules, which is sensed by nerve endings in the tooth. The carriers for the oxidising compounds enhance this movement.

The more harmful adverse effects include: solubilization of calcium from the enamel layer at a pH less than 5.5 with associated demineralization; penetration of the intact enamel and dentin by the bleaching agents, so as to reach the pulp chamber thereby risking damage to pulpal tissue; and dilution of the bleaching compositions with saliva resulting in leaching from the dental tray and subsequent ingestion.

To prevent these adverse effects dentitions have attempted to activate peroxides and "speed up" the bleaching process with the use of heat and/or light.

U.S. Pat. No. 4,661,070 discloses a method of whitening stained teeth which includes the application of a concentrated solution of hydrogen peroxide within the pulp chamber or upon the surface of a discoloured tooth, followed by exposing the discoloured tooth to optical energy consisting of both ultraviolet and infrared light from a hand tool. The disclosed method suffers from two serious drawbacks: (1) ultraviolet light can be hazardous to the patient and practitioner alike and (2) infrared light may cause irreversible pulpitis if not handled with care.

These drawbacks are partially resolved in U.S. Pat. No. 4,952,143 which discloses a dental bleaching instrument which filters out ultraviolet light and has a temperature regulation mechanism. This patent also discloses the use of visible light with wavelengths ranging from 450 to 500 and 650 to 750 manometers to produce a dark reddish/purple beam which facilitates the aiming and focusing of the instrument, which again is an externally applied head.

U.S. Pat. No. 5,032,178 discloses compositions and methods to improved tooth whitening efficacy which uses exposure to "optical energy", preferably in the visible spectrum wavelength range of 400 to 700 manometers. The compositions disclosed in this patent require the use of (1) an inert silica gelling agent, (2) a catalytic accelerator (either manganese sulfate monohydrate or ferrous sulfate), (3) an agent for providing thixoplasticity and thickening properties to the composition, such as cellulose ethers and methyl vinyl ethers, and (4) a means for indicating completion of the bleaching treatment of the teeth, comprising a redox color indicator for transforming from one color to another in response to the dissociation of hydrogen peroxide over a given time period. Compositions described therein are mixed homogeneously prior to use and all of the required components, including the catalyst, are dispersed evenly throughout the mixture. The compositions described are not highly transparent to light energy in the range of 400 to 700 nm, due to the presence of the high levels of inorganic silica particles. Commercial mixtures based on this patent (available under the trade name Shofu Hi-Lite® from Shofu Dental Corporation, Menlo Park, Calif.) confirm that these preparations are not transparent to visible light, but rather are quite opaque. Typical results obtained using such compositions and methods are about 2 to 3 VITA® shades improvement in tooth color, similar to that achieved with compositions that do not employ light energy in the process of bleaching teeth.

U.S. Pat. No. 5,240,415 discloses a dental bleaching system comprising a multi-component kit, one of the required components of said kit being fumed silica. As described above, silica renders an aqueous composition relatively opaque to visible light energy. Again, a tooth shade improvement of about 2 to 3 VITA® shades can be expected through the use of this type of composition.

A commercial product called Opalescence Xtra available for bleaching teeth in the controlled environment of a dental office is in use by Ultradent Products, Inc, South Jordan, Utah. The commercial product is supplied in a plastic syringe and is described in the accompanying literature as a light-activated tooth whitening gel, which contains approximately 35% hydrogen peroxide. The product is thickened to a loose, gel-like consistency with a polymer.

Comparative clinical results show an improvement in tooth color of from about 3 to 4 VITA® shades, which is highly dependent upon the contact time of the composition on the tooth surface, rather than any particular light or heat activation regimen. 5.5 or less).

Devices for use in light/heat-activated tooth whitening procedures include the commercially available Union Broach Illuminator System, from Union Broach, a Health-Chem Company, New York, N.Y. This device, as described by the manufacturer, provides direct, full spectrum illumination to all of the teeth found in the front of the average adult's mouth. However, this device does not uniformly illuminate all sixteen central teeth in the front upper and lower arches because of the curvature of the dentition. This potentially gives rise to uneven results. In addition, the Union Broach device generates a great deal of heat which is both uncomfortable for the patient and potentially damaging to the teeth.

### OBJECTS OF THE INVENTION

There is thus a need for improved methods and devices for whitening teeth that overcome the limitations of the prior art described above. In particular, there is a need for tooth whitening methods capable of whitening teeth quickly and safely, without harm to tooth enamel, dentin, or pulp. The apparatus and methods of the present invention described herein are intended to address these and other needs.

It is an object of this invention to provide fast and safe tooth whitening methods that can be activated or accelerated by the use of light energy.

It is an object of the invention to provide a method of applying a tooth-whitening compound in an easy and safe manner that removes the risk of damaging the patient gums.

It is a further object of this invention to provide a mouth-guard that is useable without professional assistance.

It is a further object of this invention to provide a tooth whitening method that shortens the treatment time required to obtain a given level of tooth whitening that is satisfactory to both the patient and the dentist.

It is yet another object of this invention to provide methods for whitening teeth whereby the extent of tooth whitening, in addition to the types of tooth stains removed, can be controlled by the duration, intensity and wavelength of actinic radiation exposure at the tooth surface.

It is yet another object of this invention to provide a method for teeth whitening that has a rechargeable light source.

Accordingly, in one aspect, this invention provides a tooth whitening apparatus comprising a tray for receiving in use an amount of a light-transmitting tooth whitening composition such that the tray may be positioned relative to a user's teeth such that at least a major portion of the exposed regions of the teeth may be immersed in use in said composition at one time, and a light source for introducing into the tooth whitening composition light to propagate around said tray and to be incident on the immersed surfaces of said tooth, at least partially due to internal reflection at the interface of said tooth whitening composition with the internal tray surface.

The term "light" is to be used broadly as including electromagnetic radiation in and adjacent to the visible spectrum. The term "whitening" is used in the normal context in this field to mean that the shade of the tooth is made lighter and/or discolouration of the enamel and/or dentine is lightened.

Preferably, the light source emits ultra-violet light. The light source is preferably located in said tray and advantageously is integral with said tray.

The tooth whitening apparatus as described may be manufactured and sold empty with the tray being filled with tooth whitening composition as and when required. Alternatively, the tooth whitening apparatus may be supplied already loaded with an amount of the tooth whitening composition. The tooth whitening composition preferably comprises a low concentration of an oxide composition such as hydrogen peroxide or carbamide peroxide in a form suitable for direct application to the teeth to be treated.

Preferably, the tooth whitening composition comprises a gel material into which a patient may bite. Preferably the tray is made of a rigid plastic material. The tray material may conveniently be light transmitting. In this case it is preferred for the tooth whitening composition to have a refractive index which is greater than that of the tray material so as to cause reflection and/or refraction of light from said light source. The second material may include a doping material to provide the required refractive index. The ratio of the doped material may be chosen so as to provide a relatively uni-directional and uniform emission of light from the tray.

In order to shroud the patient's gum from the tooth whitening composition and the light, the upper, otherwise exposed, surface of the tooth whitening composition may carry a reflective or light absorbent coat or film so as to prevent the light reaching the gum tissue area. Preferably, the coating is soft and pierceable so that the patient's teeth can penetrate the coating and pass into the underlying tooth whitening composition without damage to the remaining coating area, leaving the teeth immersed in the tooth whitening composition and exposed to the light but shielding the gum area. This arrangement not only protects the gum area but also ensures that the light is directed to where it is needed on the exposed regions of the teeth.

The tray may include one or more integral light emitters disposed to provide generally uniform illumination of the exposed teeth portions. A power source for the light source may be located in the tray or integral therewith. The power source may be a sealed rechargeable power source. In another arrangement, an inductive coil may be located within the tray or integral therewith and electrically connected to the light source, to allow inductive coupling with an external energised induction loop for powering the system.

The tray may take various shapes to accommodate the dental arch of the patient but in a preferred arrangement the tray is generally U-shaped defining a U-shaped channel for receiving the dental arch. In this case a light source including an associated power source can be provided at one or both ends of the U, directing light to the tray from the free ends to propagate around the tray and to illuminate the dental arch on both sides. In this case the material of the tray acts as a light guide to distribute the light around the dental arch.

In order to allow adjustment to suit various shapes of mouth, the tray may be formed of flexible, plastically deformable material so that it may be adjusted in shape to suit the patient's mouth.

In another aspect this invention provides a tooth whitening apparatus comprising a tray for receiving in use a tooth-whitening composition, the tray being shaped to allow it to be fitted to at least part of the dental arch to expose the teeth in said arch to said composition, at least one light source located in said tray for introducing light into the tray to propagate around the tray, said light source being located such that, in use, it is disposed within the user's mouth.

Preferably said tray is of U-shaped cross-section and said light source comprises a plurality of light emitting elements located in or adjacent the base of the U-shape of the tray. Said light emitting elements may be independently operable to allow only selected elements to be active.

Conveniently, said apparatus includes a power source and electrical circuitry in a part thereof which in use is disposed outside the user's mouth. The tray may comprise a removable tray element which may be removed from the remainder of the apparatus. A pressure-sensitive switch may be located in said tray for being operated in use by pressure exerted by the user's teeth to activate said light source. The tray may be pre-loaded with tooth whitening composition.

Said tooth whitening composition may be a two part composition whose constituent parts are isolated prior to use by a barrier element, disposed such that, in use, insertion of the user's tooth into the tray cause disruption of said barrier element to allow said parts to contact each other.

Preferably, at least part of the tray surfaces facing the teeth in use are reflective; in addition or alternatively, at least part of the external surfaces of the tray are reflective.

The tray may include isolating means selectively to isolate selected teeth from said tooth whitening composition. The tray may include light shield means selectively to shield selected teeth from said light source.

The apparatus preferably includes a timer for controlling the treatment period for which the light source is active. The tray may be made of a material whose optical properties change on exposure to light from said light source, thereby to indicate whether said tray has been used previously. The material may be selected such that the light transmitted thereby to the teeth in use is significantly attenuated after a preset treatment period.

The invention extends to an assembly comprising a tooth whitening apparatus as defined above, in combination with a storage unit which includes means for electrically charging said apparatus for operation of said light source and/or means for sterilising said tray. The invention also extends to an assembly comprising a tooth whitening apparatus as defined above, in combination with a container for housing said tooth whitening apparatus, said container having child-resistant means resisting opening of said container.

The invention also extends to the methods of whitening teeth using the above apparatus extending in particular, but not exclusively, to a method of whitening teeth comprising the steps of:-
fitting onto the patient's teeth a tray of light transmissive material containing tooth whitening composition, and
introducing light into the tray to illuminate the portions of the patient's teeth immersed in the tooth whitening composition.

Whilst the invention has been described above, it extends to any inventive combination of the features set out above and in the following description.

The invention may be performed in various ways, and various embodiments thereof will now be described by way of example only, reference being made to the accompanying drawings in which:-
Figure 1 is a side view of a first embodiment of this invention prior to insertion of the patient's teeth;
Figure 2 is a view similar to Figure 1 but showing the patient's incisors immersed in the tooth whitening composition;
Figure 3 is a schematic perspective view of a further embodiment of tooth whitening apparatus in accordance with this invention;
Figure 4 is a top plan view of a further embodiment of tooth-whitening apparatus in accordance with the invention;
Figure 5 is a perspective view of the apparatus of Figure 4;
Figure 6 is a cross section through part of the apparatus of Figures 4 and 5;
Figure 7 is a detailed section view through the tray of another embodiment, and
Figure 8 is a schematic view of an embodiment of apparatus which includes a charging and sterilising child-proof container.

The embodiments of the apparatus are for whitening teeth, wherein the molar and incisor teeth in either the upper or lower arch in an adult are simultaneously and uniformly illuminated with a biologically safe and effective level of actinic light to effect rapid tooth whitening.

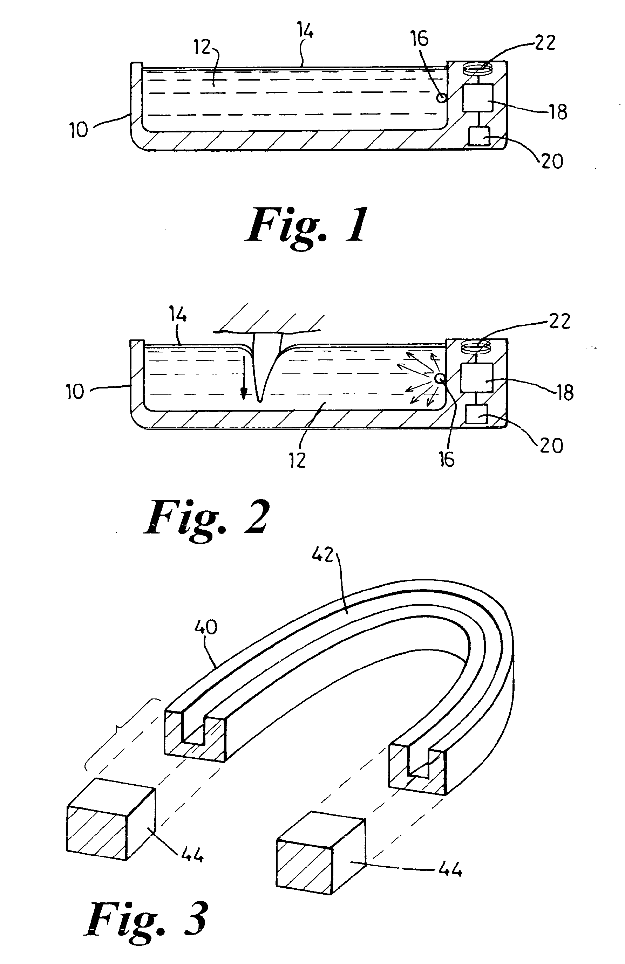

Referring initially to Figures 1 and 2, in this first embodiment, a mouth guard or tray 10 is made up of a rigid outer plastic material and contains a second, light transmitting flexible material such as a thick gel 12 within. The material of the tray 10 and the contained gel material are arranged such that a patient can bite fully into the gel material such that substantially the whole of the exposed portion of the tooth is immersed in the gel material, as seen in Figure 2. The gel material is selected to have a refractive index which is greater than that of the material from which the tray 10 is made, so as to cause light introduced into the tray through the tray wall to be refracted and/or reflected so as to propagate around the whole of the volume of the gel material, ideally to provide a relatively uni-directional and uniform illumination of the immersed teeth in use. The gel material may be doped as required to provide the required optical properties.

The gel material has a chemical composition which includes a low concentration peroxide composition such as hydrogen peroxide or carbamide peroxide in a form suitable for direct application to the teeth to be treated.

On the upper surface of the gel material 12 there is provided a reflective or light-absorbing coating or film 14 for the entire exposed surface. The coating 14 is soft and deformable so that the patient's teeth can penetrate the coating and pass into the underlying light-transmitting flexible material without further damage to the coating.

One or more integral UV emitters 16 (e.g. LED's) are integrally mounted within the tray 10 and angled so as to direct UV light around the chamber defined by the walls of the tray 10 and the coating 14 so as to uniformly distribute the UV light. A sealed chargeable power source 18 is located within the mouth guard and is electrically connected to the LED's 16 and a control circuit 20 including a timer.

In use the patient places the tray into their mouth and bites down piercing the coating layer 14 and submerging the teeth into the gel layer 12. The coating layer 14 is stretchable and forms a UV protective sheath from the tooth-gum interface as seen in Figure 2. The UV light emitting source is activated and ultra-violet light is passed about the gel layer and reacts with the oxidising agents in the peroxide composition so as to whiten the teeth within. This continues for a period of time set by the control circuit 20 whereupon the light source is deactivated and the tray is removed.

The rechargeable power source 18 may be recharged by means of an inductive arrangement comprising an integral sealed inductive coil 22 in the tray 10 to which can be applied an external inductive coil to induce current to charge the battery in contactless fashion.

Referring now to the embodiment of Figure 3, in this arrangement a tooth tray 40 is of U-shape defining a cavity 42 for receiving a peroxide composition as before and then being fitted around the teeth of the user. The upper edges of the tooth tray 40 may act as a gum shield to prevent the contained whitening composition contacting the gums and/or the UV light reaching the gums.

A UV emitter and power source module 44 is attached to each end of the tooth tray 40 as shown. Each module includes a UV light source together with a power source and control circuitry/timer. As previously, the power source can be integral and sealed and chargeable by means of an induction loop arrangement. In this configuration, the walls of the tooth tray 40 act as solid wave guides distributing the UV light around the tray, causing it to illuminate both sides of the teeth. In this arrangement, the whitening composition plays a lesser part in optical transmission of the UV light to the tooth but it still must be transmissive to light to allow the whitening action.

As a variant on this embodiment, the tooth tray may be made of a plastically deformable material so that it may be customised from standard arch shape to fit the mouth and gums of a particular user.

In use, the tooth tray 40 is fitted to the shape of the teeth and then filled with peroxide composition and then refitted to the patient's teeth. The UV source is activated so that UV light is passed about the gel layer and reacts with the oxidising agents to cause whitening of the teeth. After the preset period of time has passed the UV light is deactivated and the patient removes the gum shield.

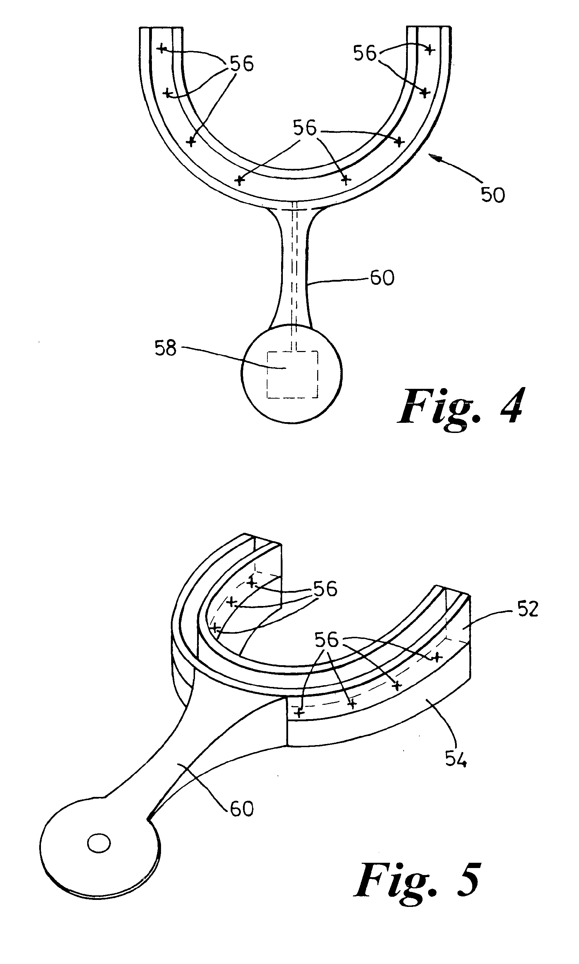

Referring now to the embodiment of Figures 4 to 6, here a tooth whitening apparatus is provided where the light source comprises a series of light emitting elements distributed around the base of the tray so that, in use, the light source is within the user's mouth. The power and controlling modules for the light sources are positioned outside the mouth. Thus, the device comprises a tray element 50 here made up of an upper arch part and a lower arch part 54. Each of the arch parts 52, 54 is shaped to conform to the dental arch and are of channel form. In some instances the arch parts 52 and 54 may be of resiliently conformable material whereas in other instances they may be relatively rigid. The arch parts are each made of optically transmissive material.

Disposed at the interface between the upper and lower arch parts 52, 54 is a series of light emitting diodes 56. These are disposed to project light upwardly and downwardly through the associated arch part 52, 54 to illuminate the user's teeth in use both from the front and rear sides. By mounting the light sources close to the teeth low powered devices can be used which can result in a more economical device both in terms of power and cost. Also, compared to devices which use an external light source, the light path between the light element and the whitening composition and tooth surface is much less, thus leading to reduced losses.

The light sources 56 are connected to a control and circuit 58 located in the handle 60 so that the overall apparatus is generally stirrup-shaped. The control circuitry includes a timer which limits the exposure time.

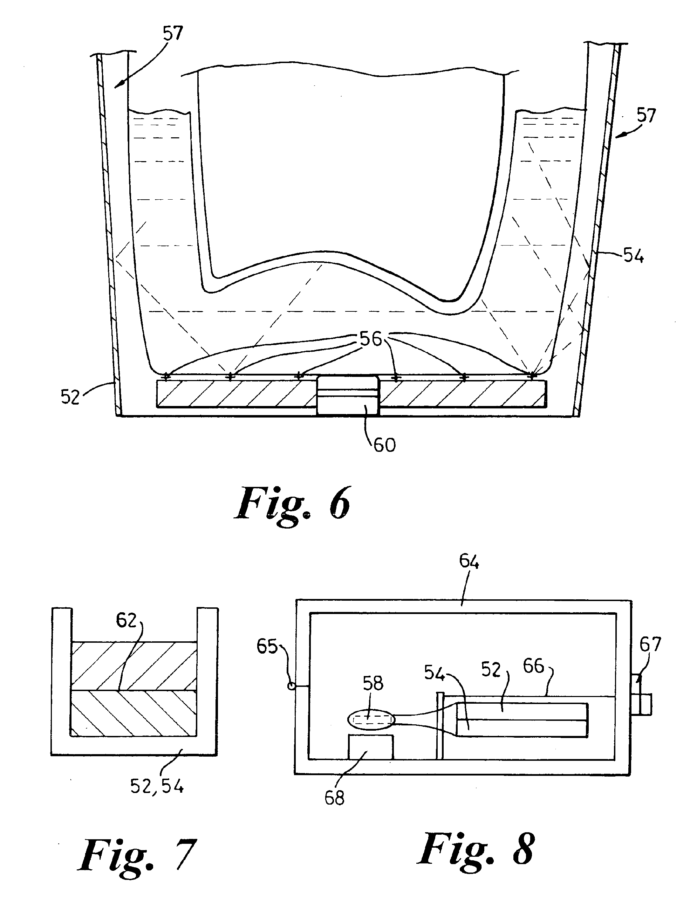

As seen in Figure 6, a pressure sensitive switch strip 60 may be provided in the base of one or more of the arch parts 52, 54 to detect when the user has bitten into the tooth whitening composition and closing of the switch 60 may initiate activation of the LED's and starting of the timer. Also as shown in Figure 6, the walls of the arch parts 52, 54 may be rendered reflective as shown at 57 so that the light emitted by the light emitting elements 56 is not lost through the walls and instead is reflected back into the interior through the whitening composition onto the tooth.

In use, the arch parts may either be pre-loaded with tooth whitening composition or the user may apply the tooth whitening composition before use. The user then fits the device into his mouth so that his teeth sink into the tooth whitening composition. The light emitting elements 56 are then activated for the selected duration and the device is then removed.

Referring now to Figure 7, in this arrangement a two-part tooth whitening gel is pre-loaded into the upper and lower arch parts 52, 54 with the two parts of the composition being separated by a barrier element 62 such as a membrane or the like. In use, the user fits the arch part against his teeth and presses so that his teeth disrupt the barrier element 62 to allow the parts of the whitening composition to come into mutual contact.

Referring now to Figure 8, in this arrangement the tooth whitening apparatus is provided with a charging/sterilising stand or container 64 which is hinged at 66 and closed by a child-resistant closure 67. The child-resistant closure 67may typically comprise a latch which requires some degree of dexterity to open so that it is resistant to opening by young children. Instead of there being a child- resistant latch, the container may have a key lock. Inside the container there is a bar 66 which can contain sterilising fluid into which the arch parts 52, 54 may be immersed together or one at a time. The tooth whitening apparatus is held with the electric source circuitry 58 adjacent a charging module 68 which allows charging of an internal battery inductively.

The circuit 58 may be operable to allow the user to select different treatment times; this could be done by use of button switches (not shown) on the device adjacent the circuitry 58.

In a further embodiment, the arch parts 52, 54 or parts thereof may be made of a material which reacts with the frequency of the light emitted by the light emitting elements 56 so that it changes colour. Such a material may consist of a polymeric material doped with a colour changing reactive ink. This allows a user to tell instantly whether a mouth shield has been previously used. A suitable, irreversible, photochromic material could be dianylethene, which permanently changes from clear to red in the presence of UV light.

In the above embodiments, light shielding may be applied to mask selective teeth to prevent exposure thereof to the treatment light. This could be a separate insertable element of opaque material which blocks the light transmission or it could be an opaque material painted or coated on the relevant area of the arch parts. Likewise, the apparatus may be modified to isolate one or more teeth from contact with the tooth whitening composition.

In addition, the light elements 56 may be turned on and off selectively so as to reduce or prevent the amount of light impinging on particular teeth.

In the above embodiments the light source make take many forms including LEDs , electroluminescent materials or mixtures of the two. The tray is removable to allow replacement thereof so that the remainder of the apparatus may be re-used. The tray may comprise a single piece or it may be made up of several pieces each conforming to part of the dental arch, for example an upper and a lower part, or left and right upper and lower parts.

## Claims

1. A tooth whitening apparatus comprising a tray for receiving in use a tooth-whitening composition, the tray being shaped to allow it to be fitted to at least part of the dental arch to expose the teeth in said arch to said composition, at least one light source located in said tray for introducing light into the tray to propagate around the tray, said light source being located such that, in use, it is disposed within the user's mouth.

2. A tooth whitening apparatus according to Claim 1, wherein said tray is of U-shaped cross-section and said light source comprises a plurality of light emitting elements located in or adjacent the base of the U-shape of the tray.

3. A tooth whitening apparatus according to Claim 2, wherein said light emitting elements are independently operable to allow only selected elements to be active.

4. A tooth whitening apparatus according to Claim 1 or 2, wherein said apparatus includes a power source and electrical circuitry in a part thereof which in use is disposed outside the user's mouth.

5. A tooth whitening apparatus according to any of the preceding claims, wherein the tray comprises a removable tray element which may be removed from the remainder of the apparatus.

6. A tooth whitening apparatus according to any of the preceding claims, wherein a pressure-sensitive switch is located in said tray for being operated in use by pressure exerted by the user's teeth to activate said light source.

7. A tooth whitening apparatus according to any of the preceding claims, wherein said tray is pre-loaded with tooth whitening composition.

8. A tooth whitening apparatus according to any of the preceding claims, wherein said tooth whitening composition is a two part composition whose constituent parts are isolated prior to use by a barrier element, disposed such that, in use, insertion of the user's tooth into the tray cause disruption of said barrier element to allow said parts to contact each other.

9. A tooth whitening apparatus according to any of the preceding claims, wherein at least part of the tray surfaces facing the teeth in use are reflective.

10. A tooth whitening apparatus according to any of the preceding claims wherein at least part of the external surfaces of the tray are reflective.
